# EUROPEAN PATENT APPLICATION

(11) **EP 1 055 377 A1**
(43) Date of publication of application: **29.11.2000**
(21) Application number: 99500109.6
(22) Date of filing: 28.06.1999
(51) Int. Cl.: A43B 13/18, B29D 31/515, A43B 17/02, A43B 21/32

(54) **Manufacturing Method for shock-absorbing soles or insoles, molds and soles thus obtained**

(30) Priority: 26.05.1999 ES 9901127
(71) Applicant: Ivan Continental, S.L., 03158 Catral (Alicante) (ES)
(72) Inventor: Anton Murcia, Francisco Javier, 03158 Catral (Alicante) (ES)
(74) Representative: Perez Bonal, Bernardo

(57) **Abstract**

Sole (1) or insole (1.1) is crimped in mold (6) round detachable or detachables (6.1) which are orthogonal to its inner base (6.2), with a support (3) attached to the rear of either one, on the surface of mold (6), so that removing the set is aided by a simple pressure of the user on support (3) where it meets detachable (6.1), then proceeding to incorporate insert (4) or inserts, in different shapes and colors, inside the space (2) or spaces of sole (1) or insole (1.1).

## Description

### OBJECT OF THE INVENTION

The invention here proposed consists of a manufacturing method for shock-absorbing soles or insoles, molds and soles or insoles thus obtained, from among the soles or insoles made with different products, some being arranged by sectors and with shock-absorbing functions.

The invention is characterised by a special construction of the sole or insole in an elevated mold in order to incorporate a conventional upper support which in certain areas acts as an arch for insertion of a shock absorbing material, with at least one detachable incorporated to the open space, extending from the lower base of the mold.

### BACKGROUND OF THE INVENTION

As is well known, the construction of a shoe depends greatly on its specific intended use, whether athletic or dress, sometimes incorporating soles, whether anatomically shaped or not, of a height ranging from a few millimeters to several centimeters, or insoles which may also be thus shaped or not and which are generally under four millimeters high, both being provided with an upper support for the foot to rest on, which may or may not be interchangeable.

The sole ribs are generally incorporated to the soles or insoles in middle layers and so that they absorb the motion of the foot during walking or running, in combination with other perimetral ribs meant to maintain foot posture and support the foot, so that it does not receive impact from harder areas of the insole, in both anatomical and orthopedic construction.

The applicant is not aware of the existence of sole or insole constructions having the characteristics hereunder described.

### DESCRIPTION OF THE INVENTION

The invention object of the present memory relates to a shock-absorbing sole, from among those soles built with different products, so that these are incorporated to the sole forming different sectors of the base and opposite areas requiring the shock-absorbing function.

The invention is characterised by a special construction of the sole, from any material and on a mold, which is built overelevated, in order to eventually incorporate a conventional support to the upper base, made from textile fabric, leather or plastic, after curing of the product when so required, such as for polyurethane, or once the structure is shaped or the production temperature is lowered, or alternatively the support becomes the upper arch for the element or elements introduced which absorb shocks during walking or running.

This upper support, preferably made from leather, is placed flush in one or several areas of its lower surface with one or more detachables, which protrude out from the lower base of the mold.

In the event of removing the sole or insole and support unit, this is aided by a simple pressure applied by the user on the point of contact the support and the detachable, and when the mold process, whether this is made from polyurethane, EVA, cork-rubber or other conventional materials, is performed in a non-overelevated mold, it is conventionally removed by its perimeter.

In the space left by the mold detachable, in any case, an insert or alternatively several inserts, is incorporated to the rear, made from a shock-absorbing material, with the detachables placed in the space or, alternatively, spaces left empty by the corresponding material, made from a suitable material for its shock-absorbing functions, such as latex, rubber or other.

### DESCRIPTION OF THE DRAWINGS

As a complement of the description being made and in order to aid a better and easier understanding of the characteristics of the invention, attached to this descriptive memory as an integral part of the same is a set of drawings, where, for purposes of illustration and in a non-limiting sense the following is shown:

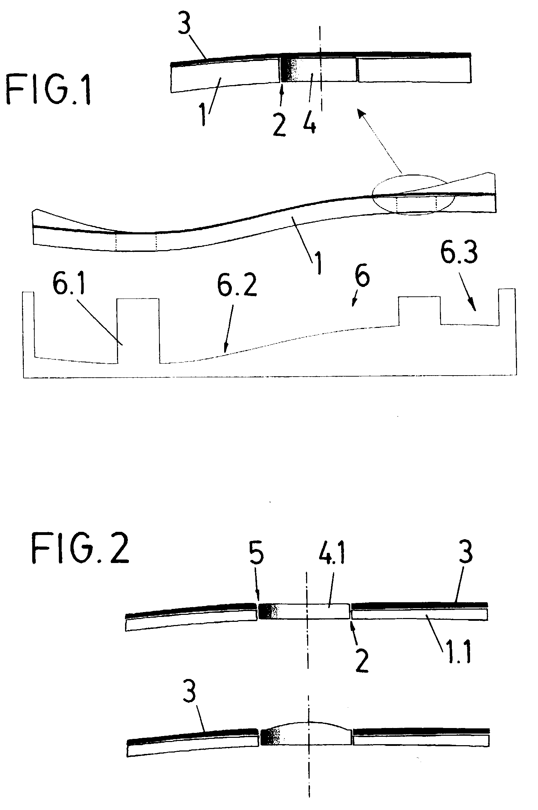

Figure 1 shows a cross section and enlargement of the longitudinal elevation of a sole, in an upper exploded view with respect to a mold, with the sole showing its corresponding anatomical design and the upper support as an arch for the shock-absorbing insert placed in the heel area and, shaded, a simple frontal orifice, with a schematic representation of the position of the other insert in the front area of the instep.
Figure 2 shows a sectional view of two alternative constructions of the insert which passes through an insole, one coplanar and another slightly centrally convex, in order to prevent rubbing of a relatively hard support edge, such as plastic, as it is compressed.

### PREFERRED EMBODIMENT OF THE INVENTION

In view of that exposed above, the present invention relates to a manufacturing method for shock-absorbing soles or insoles, molds and soles or insoles thus obtained, for any material of the base, whether polyurethane, EVA, rubber cork or any other material, and for those made on a mold and having a support in their upper base, preferably of leather, the anatomical or orthopedic sole or insole set also incorporating one or more materials, preferably opposite antagonistic areas of the foot which require shock absorption, essentially characterised by mold (6) having at least one detachable (6.1) orthogonal to its inner base (6.2), as well as a rise (6.3) of the upper edge, in order to crimp sole (1) or insole (1.1) in the detachable in the lower area of mold (6.4), as well as to attach to the rear of either a support (3) in the remaining section or higher area (6.3) of mold (6) so that removal of the set is aided by a simple pressure of the user on support (3) in the area where it is in contact with detachable (6.1), afterwards incorporating insert (4) or inserts in space (2) or spaces left in sole (1) or insole (1.1).

It is also characterised by sole (1) or insole (1.1) having at least one open space (2), in correspondence with detachable (6.1) at least, which reaches the lower surface of support (3) which forms an upper arch for the insert element (4) or elements which absorbs shock during walking or running, made of a material suited for this shock-absorbing function, such as latex, rubber or another.

Alternatively, it is characterised by support (3) having a perforation (5) corresponding to that of sole (1) or insole (1.1), through which also passes the shock-absorbing insert (4.1), coplanar to or convexly protruding from the upper surface of said support (3), in the latter case one of these inserts (4.1) at least being overelevated.

In these cases with visible insert or inserts (4.1), their colors may be made to match those of support (3), as well as to bear, either in line or in color or both, the brand logo or any desired marketing message relating to their shock-absorbing qualities, and may even be adapted to these, so that detachables (6.1) and therefore inserts (4.1) are made in the form of the logo or message instead of any regular or irregular shape, thus reinforcing it.

The essence of this invention is unchanged by variations of material, shape, size or arrangement of its components, described in a non-limiting manner, sufficient for reproduction by an expert in the field.

## Claims

1. Manufacturing method for shock-absorbing soles or insoles, among those made from a mold, essentially characterised in that sole (1) or insole (1.1) is crimped on mold (6) and around orthogonal detachable or detachables (6.1) of its internal base (6.2), in the lower area of mold (6.4), as well as in having attached to the rear of either one a support (3) in the remaining sector or rise (6.3) of the upper edge of mold (6), so that removal of the set is aided by a simple pressure by the user on support (3) where it comes in contact with detachable (6.1), then proceeding to incorporate insert (4) or inserts in recess (2) or recesses of sole (1) or insole (1.1).

2. Mold (6), among molds for manufacturing soles (1) and insoles (1.1), as in previous claim, characterised by having at least one orthogonal detachable (6.1) on its internal base (6.2), as well as a rise (6.3) of its upper edge, the detachable or detachables (6.1) creating a specific regular or irregular figure, including a brand logo or advertising message.

3. Shock absorbing sole or insole, as in previous claims, among soles and insoles with a base made of any material, whether polyurethane, EVA, cork rubber or any other, and having a support in their upper base, preferably made of leather, as well as the set of anatomical or orthopedic sole or insole incorporating one or more materials, preferably in areas which correspond to antagonistic areas of the foot which require shock absorbing functions, characterised in that sole (1) or insole (1.1) is provided at least with one space (2) which passes clear through, related to at least detachable (6.1), which reaches the lower surface of support (3) which becomes the upper dome of the insert element or elements (4) for shock absorbing during walking or running, made from an adequate material for this shock-absorbing function, such as latex, rubber or other.

4. Shock absorbing sole or insole, as in previous claims, characterised in that alternatively support (3) includes a perforation (5) in correspondence with that of sole (1) or insole (1.1), through which is also disposed the shock-absorbing insert element (4.1), placed coplanar with the upper surface of this support (3).

5. Shock absorbing sole or insole, as in previous claims, characterised in that at least one insert (4.1) is placed convex and protruding from the upper surface of support (3).

6. Shock absorbing sole or insole, as in previous claims, characterized in that in the colors of visible insert or inserts (4.1) are matched with those of support (3), as well as these inserts bearing, whether in line, color or both, the brand logo or a suitable marketing message related to this shock absorption.

7. Shock absorbing sole or insole, as in previous claims, characterised in that the space or spaces (2) and inserts (4.1) have the shape of the brand logo or message, thus reinforcing the logo or message.
